# EUROPÄISCHE PATENTSCHRIFT

(11) **EP 3 430 081 B1**
(45) Veröffentlichungstag und Bekanntmachung des Hinweises auf die Patenterteilung: **22.01.2020**
(21) Anmeldenummer: 17711157.2
(22) Anmeldetag: 16.03.2017
(51) Int. Cl.: C08L 25/12, C08L 55/02, C08L 77/00, B29C 67/00, B33Y 70/00

(54) **VERWENDUNG VON FORMMASSEN BASIEREND AUF BLENDS VON SAN-COPOLYMEREN UND POLYAMID FÜR DEN 3D DRUCK**
USE OF MOULDING COMPOUNDS BASED ON BLENDS OF SAN-COPOLYMERS AND POLYAMIDE FOR 3D PRINTING
UTILISATION DE MATIÈRES À MOULER À BASE DE MÉLANGES DE COPOLYMÈRES SAN ET DE POLYAMIDE POUR L'IMPRESSION 3D

(30) Priorität: 17.03.2016 EP 16160892
(43) Veröffentlichungstag der Anmeldung: 23.01.2019
(73) Patentinhaber: INEOS Styrolution Group GmbH, 60325 Frankfurt am Main (DE)
(72) Erfinder: BAUMANN, Stéphanie, 97072 Würzburg (DE); EISENTRÄGER, Frank, 50996 Köln (DE); MEINERS, Josef, 47798 Krefeld (DE); NIESSNER, Norbert, 67159 Friedelsheim (DE); SCHMIDT, Hans-Werner, 95444 Bayreuth (DE)
(74) Vertreter: Jacobi, Markus Alexander
(86) Internationale Anmeldenummer: PCT/EP2017/056220
(87) Internationale Veröffentlichungsnummer: WO 2017/158080

(56) Entgegenhaltungen:
- WO-A1-2012/065977
- WO-A1-2015/091817
- CN-A- 104 877 297
- US-A1- 2014 141 168

## Beschreibung

Die Erfindung betrifft die Verwendung von thermoplastischen Formmassen basierend auf einem Blend (Mischung) von schlagzäh-modifiziertem Styrol/Acrylnitril (SAN)-Copolymer und Polyamid für den 3D-Druck.

Die Verwendung von amorphen Thermoplasten für den 3D-Druck, insbesondere von Acrylnitril-Butadien-Styrol (ABS), ist bekannt. So wird in der EP-A 1015215 ein Verfahren zur Herstellung eines dreidimensionalen Objekts von vorbestimmter Form aus einem thermisch verfestigbaren Material beschrieben. Für den 3D-Druck wird zunächst das Material verflüssigt und extrudiert, unter Bewegung werden mehrere Schichten des Materials auf einen Träger aufgebracht, und dann wird das geformte Material durch Kühlen unter die Erstarrungstemperatur des Materials verfestigt. Als thermisch verfestigbares (härtbares) Material werden amorphe Thermoplaste, insbesondere Acrylnitril-Butadien-Styrol (ABS), verwendet.

EP-A 1087862 beschreibt ein "Rapid-Prototyping-System" zur Herstellung eines dreidimensionalen Gegenstands durch Extrusion und Aufbringen von erstarrbarem thermoplastischem Modellier- und Stützmaterial in mehreren Schichten. Das thermoplastische Material wird über eine Spule zugeführt. Als geeignetes modellierbares Material wird ABS genannt. Als brüchiges Stützmaterial, welches nach Fertigstellung des 3D-Modells entfernt wird, wird eine Mischung aus ABS und einem Polystyrol-Copolymer als Füllmaterial mit einem Anteil von bis zu 80% eingesetzt.

EP-A 1497093 beschreibt ein Verfahren zur Herstellung eines Prototyps eines Kunststoffspritzteils aus einem thermoplastischen Material, das verflüssigt in eine Form eingespritzt wird bis es deren Hohlraum ausfüllt und nach Aushärten den Prototyp bildet. Der Prototyp wird dabei via "Fused Deposition Modeling", einer speziellen 3D Druckmethode hergestellt. Das thermoplastische Material wird ausgewählt aus: ABS, Polycarbonat, Polystyrol, Acrylaten, amorphen Polyamiden, Polyestern, PPS, PPE, PEEK, PEAK und Mischungen davon, bevorzugt ist ABS. Um Schrumpfphänomene zu vermeiden werden vorzugsweise amorphe Thermoplasten eingesetzt.

US 2008/0071030 beschreibt ein thermoplastisches Material, welches zur Herstellung von dreidimensionalen Modellen durch mehrschichtige Abscheidung verwendet wird. Das thermoplastische Material enthält ein Basispolymer, ausgewählt aus der Gruppe bestehend aus Polyethersulfonen, Polyetherimiden, Polyphenylsulfonen, Polyphenylenen, Polycarbonaten, Polysulfonen, Polystyrolen, Acrylaten, amorphen Polyamiden, Polyestern, Nylon, Polyetheretherketonen und ABS, und 0,5 bis 10 Gew.-% eines Silikon-Trennmittels.

Bevorzugt wird als Basispolymer Polyethersulfon eingesetzt und Mischungen davon mit Polystyrol (3 bis 8 Gew.-%). Zur Vermeidung von Schrumpf werden vorzugsweise amorphe Polymere und gegebenenfalls übliche Füllmaterialien eingesetzt.

In US 2009/0295032 werden für den 3D-Druck modifizierte ABS Materialien vorgeschlagen. Die ABS-Materialien werden durch zusätzliche Monomere, Oligo- oder Polymere, insbesondere Acrylate modifiziert. Beispielhaft werden MMA-modifizierte ABS/Poly(Styrol-Acrylnitril)-Blends, insbesondere CYCOLAC ABS MG 94, genannt. Die Proportionen der Komponenten und die Viskosität der Blends werden nicht angegeben.

Die vorgenannten Materialien sind jedoch oftmals für den 3D-Druck zu spröde und in Bezug auf die Zähigkeit sowie ihren Geruch verbesserungsbedürftig. Darüber hinaus ist bei den Materialien des Standes der Technik oftmals auch die Viskosität unter den Bedingungen des Schmelzflussindexes bei niedrigen Scherraten zu hoch und ebenfalls verbesserungsbedürftig.

WO 2015/091817 offenbart thermoplastische Formmassen für den 3D-Druck mit einem verbesserten Zähigkeits/Viskositätsverhältnis, die auf schlagzäh modifizierten Vinylaromat-Copolymeren, insbesondere Styrol-Acrylnitril-(SAN)-Copolymeren, basieren. Als Schlagzähmodifikator werden bevorzugt ABS-Pfropfkautschuke eingesetzt. Die Formmassen können gegebenenfalls noch weitere Polymere ausgewählt aus Polycarbonaten, Polyamiden, Poly(meth)acrylaten, Polyestern und Vinylaromat-Dien-Copolymeren (SBC) in einer Menge von 0 bis 60 Gew.-%, bevorzugt 0 bis 30 Gew.-%, enthalten. Beispiele dazu gibt es nicht.

Beim 3D-Druck von anspruchsvollen (komplizierter gestalteten) Formkörpern mit einer Brückenbildung sind die meisten aus dem Stand der Technik bekannten Formmassen noch verbesserungsbedürftig.

Eine Aufgabe der vorliegenden Erfindung ist es, verbesserte, geruchsarme thermoplastische Materialien für den 3-D-Druck bereit zustellen, die auch für den 3-D-Druck von Überhängen wie Treppen und von Brücken geeignet sind.

Die Aufgabe wurde gelöst durch die Verwendung der nachstehend beschriebenen Formmassen für den 3D-Druck.

Gegenstand der Erfindung ist die Verwendung einer thermoplastischen Formmasse für den 3D-Druck, enthaltend oder bestehend aus einer Mischung der Komponenten:
A: 35 bis 60 Gew.-% mindestens eines, bevorzugt eines, schlagzäh-modifizierten Polymers A, bestehend aus den Komponenten a und b:
   a: 30 bis 95 Gew.-% mindestens eines Styrol-Acrylnitril-Copolymers a mit einer mittleren Molmasse Mw von 150.000 bis 350.000 g/mol, erhalten durch Polymerisation von:
      a1: 18 bis 35 Gew.-% Acrylnitril (AN), und
      a2: 82 bis 65 Gew.-% Styrol (S);
   b: 5 bis 70 Gew.-% mindestens eines Pfropfcopolymers b als Schlagzähmodifikator, mit
      b1: 45 bis 85 Gew.-% einer Pfropfgrundlage b1, erhalten durch Polymerisation von:
         b11: 80 bis 100 Gew.-% 1,3-Butadien,
         b12: 0 bis 20 Gew.-% Styrol;
      b2: 15 bis 55 Gew.-% einer Pfropfauflage b2, erhalten durch Polymerisation von:
         b21: 70 bis 90 Gew.-%, bevorzugt 72,5 bis 85 Gew.-% Styrol;
         b22: 10 bis 30 Gew.-%, bevorzugt 15 bis 27,5 Gew.-% Acrylnitril;
         wobei die Summe aus a und b, bezogen auf A, 100 Gew.-% ergibt;
B: 33 bis 58 Gew.-% mindestens eines, bevorzugt eines, Polyamids B ausgewählt aus: Polyamid 6 (Polycaprolactam), Polyamid 6,6 (Polyhexamethylenadipamid), Polyamid 4,6 (Polytetramethylenadipamid), Polyamid 5,10 (Polypentamethylenadipamid), Polyamid 6,10 (Polyhexamethylensebacamid), Polyamid 7 (Polyenantholactam), Polyamid 11 (Polyundecanolactam) und Polyamid 12 (Polydodecanolactam);
C: 1 bis 10 Gew.-% mindestens eines, bevorzugt eines, Verträglichkeitsvermittlers C auf Basis eines Styrol-Acrylnitril-Maleinsäureanhydrid-Terpolymers, erhalten durch Polymerisation von:
   C1: 72 bis 84,5 Gew.-%, bevorzugt 74 bis 84 Gew.-% Styrol;
   C2: 15 bis 27,5 Gew.-%, bevorzugt 15 bis 25 Gew.-% Acrylnitril;
   C3: 0,5 bis 5 Gew.-%, bevorzugt 1 bis 3 Gew.-% Maleinsäureanhydrid (MSA);
D: 0,01 bis 5 Gew.-% eines oder mehrerer Hilfsmittel D ausgewählt aus: Stabilisatoren, Oxidationsverzögerern, Mitteln gegen Wärmezersetzung und Zersetzung durch ultraviolettes Licht, Gleit- und Entformungsmitteln, Verarbeitungshilfsmitteln und Weichmachern;
E: 0 bis 30 Gew.-% eines oder mehrerer weiterer Additive E;
wobei die Summe aus den Komponenten A, B, C, D und, falls vorhanden E, 100 Gew.-% (der Formmasse) ergibt.

Im Allgemeinen beträgt die Viskosität (gemessen nach ISO 11443:2014) der erfindungsgemäß verwendeten Formmasse bei Scherraten von 1 bis 10 1/s und bei Temperaturen von 250°C nicht mehr als 1x10⁵ Pa*s und die Melt Volume Rate (MVR, gemessen nach ISO 1133-1:2011 bei 240°C und 10 kg Last) mehr als 15 ml/10 min.

Die Summe der in Gew.-% angegebenen Mengen der vorgenannten Komponenten a1 und a2, b11 und b12, b21 und b22, C1, C2 und C3 ergibt jeweils immer 100 Gew.-%.

Die Bestimmung der gewichtsmittleren Molmasse Mw erfolgt mittels GPC (Lösungsmittel: Tetrahydrofuran, Polystyrol als Polymerstandard) mit UV-Detektion (DIN EN ISO 16014-5:2012-10).

Im Sinne der vorliegenden Erfindung ist unter 3D-Druck die Herstellung von dreidimensionalen Formkörpern mit Hilfe einer für den 3D-Druck geeigneten Vorrichtung (3D-Drucker) zu verstehen. Bei dem erfindungsgemäß verwendeten 3D-Drucker handelt es sich insbesondere um einen für das Fused Deposition Modeling-(FDM)-Verfahren geeigneten 3D-Drucker.

Das FDM-Verfahren ist ein Schmelzschichtungsverfahren bei dem Filamente aus einer für den 3D-Druck geeigneten Formmasse durch Erwärmung in dem 3D-Drucker verflüssigt werden, danach die verflüssigte Formmasse durch Extrudieren mit einer in der Fertigungsebene frei beweglichen Heizdüse schichtweise auf eine bewegliche Bauplattform (Druckbett) oder eine vorhergehende Schicht der Formmasse aufgetragen wird, und dann das geformte Material, gegebenenfalls durch Kühlung, verfestigt wird.

Bevorzugt ist eine erfindungsgemäß verwendete Formmasse wie zuvor beschrieben bestehend aus:
35 bis 50 Gew.-% Komponente A,
40 bis 58 Gew.-% Komponente B,
1 bis 10 Gew.-% Komponente C,
0,01 bis 5 Gew.-% Komponente D, und
0 bis 20 Gew.-% Komponente E.

Besonders bevorzugt ist eine erfindungsgemäß verwendete Formmasse wie zuvor beschrieben bestehend aus:
35 bis 50 Gew.-% Komponente A,
45 bis 58 Gew.-% Komponente B,
1 bis 10 Gew.-% Komponente C,
0,01 bis 5 Gew.-% Komponente D, und
0 bis 10 Gew.-% Komponente E.

Ganz besonders bevorzugt ist eine erfindungsgemäß verwendete Formmasse wie zuvor beschrieben bestehend aus:
40 bis 50 Gew.-% Komponente A,
45 bis 55 Gew.-% Komponente B,
2 bis 6 Gew.-% Komponente C,
0,05 bis 3 Gew.-% Komponente D,
0 bis 10 Gew.-% Komponente E.

Weiterhin ganz besonders bevorzugt ist eine erfindungsgemäß verwendete Formmasse wie zuvor beschrieben bestehend aus:
40 bis 49,95 Gew.-% Komponente A,
48 bis 55 Gew.-% Komponente B,
2 bis 6 Gew.-% Komponente C,
0,05 bis 3 Gew.-% Komponente D, und
0 bis 9,95 Gew.-% Komponente E.

Bevorzugt sind vorgenannte Formmassen, in denen die Komponente E nicht vorhanden ist.

Geeignete erfindungsgemäß verwendbare Formmassen sind auch im Handel als Terblend® N NM-21 EF von der Firma Ineos Styrolution erhältlich.

### Schlagzäh modifiziertes Polymer A

Bevorzugt beträgt in dem schlagzäh modifizierten Polymer A der Anteil der Komponente a 30 bis 60 Gew.-% und der Anteil des als Schlagzähmodifikators eingesetzten Propfcopolymers b 70 bis 40 Gew.-%.

Besonders bevorzugt in dem schlagzäh modifizierten Polymer A der Anteil der Komponente a 40 bis 60 Gew.-% und der Anteil des als Schlagzähmodifikators eingesetzten Propfcopolymers b 60 bis 40 Gew.-%.

Ganz besonders bevorzugt beträgt in dem schlagzäh modifizierten Polymer A der Anteil der Komponente a 50 bis 60 Gew.-% und der Anteil des Propfcopolymers b 50 bis 40 Gew.-%.

### SAN-Copolymer a

Das SAN-Copolymer a bildet eine Hartphase mit einer Glasübergangstemperatur TG von > 20°C.

Erfindungsgemäß eingesetzte SAN-Copolymere a enthalten im Allgemeinen 18 bis 35 Gew.-%, bevorzugt 20 bis 32 Gew.-%, besonders bevorzugt 22 bis 30 Gew.-% Acrylnitril (AN), und 82 bis 65 Gew.-%, bevorzugt 80 bis 68 Gew.-%, besonders bevorzugt 78 bis 70 Gew.-% Styrol (S), wobei die Summe aus Styrol und Acrylnitril 100 Gew.-% ergibt.

Die eingesetzten SAN-Copolymere a weisen im Allgemeinen eine gewichtsmittlere Molmasse Mw von 150.000 bis 350.000 g/mol, bevorzugt 150.000 bis 250.000 g/mol und ganz besonders bevorzugt 150.000 bis 200.000 g/mol auf.

Das SAN-Copolymer a hat üblicherweise eine Viskositätszahl VZ (ermittelt nach DIN 53 726 bei 25°C, an einer 0,5 Gew.-%igen Lösung des Polymers a in Dimethylformamid) von 52 bis 100 und bevorzugt 55 bis 80 ml/g.

Die SAN-Copolymere a werden in bekannter Weise durch Masse-, Lösungs-, Suspensions-, Fällungs- oder Emulsionspolymerisation erhalten, wobei Masse- und Lösungspolymerisation bevorzugt sind. Einzelheiten dieser Verfahren sind z. B. im Kunststoffhandbuch, Hrg. R. Vieweg und G. Daumiller, Bd. 4 "Polystyrol", Carl-Hanser-Verlag München 1996, S. 104 ff sowie in "Modern Styrenic Polymers: Polystyrenes and Styrenic Copolymers" (Eds., J. Scheirs, D. Priddy, Wiley, Chichester, UK, (2003), Seiten 27 bis 29) und in GB-A 1472195 beschrieben.

Als SAN-Copolymere a geeignet sind handelsübliche SAN-Copolymere wie beispielsweise Luran® von der Firma Ineos Styrolution. Bevorzugt werden SAN-Copolymere mit einem S/AN-Verhältnis (in Gewichtsprozent) von 81/19 bis 67/33 und einem MVR (gemessen nach ISO 1133 bei 220°C und 10 kg Last) von mindestens 10 ml/10 min wie beispielsweise Luran 368 eingesetzt. Weiterhin bevorzugt werden SAN-Copolymere mit einem S/AN-Verhältnis (in Gewichtsprozent) von 81/19 bis 65/35 und einem MVR (gemessen nach ISO 1133 bei 220°C und 10 kg Last) von mindestens 8 ml/10 min wie beispielsweise Luran M60, Luran VLL1970, Luran 25100, Luran VLP und Luran VLR eingesetzt; besonders bevorzugt sind unter den vorgenannten SAN-Copolymeren solche mit einem MVR von mindestens 10 ml/10 min.

### Pfropfcopolymer (Schlagzähmodifikator) b

Erfindungsgemäß wird als Schlagzähmodifikator mindestens ein Acrylnitril-Butadien-Styrol-(ABS)-Schlagzähmodifikator bzw. mindestens ein Acrylnitril-Butadien-Styrol-Pfropfcopolymer b eingesetzt. Der ABS-Schlagzähmodifikator bildet eine Weichphase mit einer Glasübergangstemperatur TG von < 0°C, vorzugsweise < -20°C, besonders bevorzugt < -40°C.

Die Teilchengröße der erfindungsgemäß eingesetzten Schlagzähmodifikatoren b beträgt im Allgemeinen mindestens 80 nm und höchstens 1 µm, bevorzugt 100 nm bis 600 nm, besonders bevorzugt 150 nm bis 500 nm, ganz besonders bevorzugt 200 nm bis 450 nm. Dabei bezieht sich die Teilchengröße auf den mittleren Teilchendurchmesser d₅₀.

Die Bestimmung des mittleren Teilchendurchmessers d₅₀ kann durch Ultrazentrifugenmessung ermittelt werden (vgl. W. Scholtan, H. Lange : Kolloid Z. u. Z. Polymere 250, S. 782 bis 796 (1972)).

Es können ein oder mehrere Schlagzähmodifikatoren b mit uni-, bi-, tri- oder multimodalen Teilchengrößenverteilungen eingesetzt werden.

Erfindungsgemäß wird mindestens ein Pfropfcopolymer (Schlagzähmodifikator) b eingesetzt mit
b1: 45 bis 85 Gew.-%, bevorzugt 50 bis 80 Gew.-%, besonders bevorzugt 55 bis 75 Gew.-% einer Pfropfgrundlage b1 erhalten durch Polymerisation von:
   b11: 80 bis 100 Gew.-%, bevorzugt 90 bis 100 Gew.-% 1,3-Butadien,
   b12: 0 bis 20 Gew.-%, bevorzugt 0 bis 10 Gew.-% Styrol;
b2: 15 bis 55 Gew.-%, bevorzugt 20 bis 50 Gew.-%, besonders bevorzugt 25 bis 45 Gew.-% einer Pfropfauflage b2, erhalten durch Polymerisation von:
   b21: 70 bis 90 Gew.-%, insbesondere 72,5 bis 85 Gew.-%, besonders bevorzugt 75 bis 85 Gew.-% Styrol;
   b22: 10 bis 30 Gew.-%, insbesondere 15 bis 27,5 Gew.-%, besonders bevorzugt 15 bis 25 Gew.-% Acrylnitril.

Bevorzugt ist mindestens ein Pfropfcopolymer b mit
b1: 50 bis 80 Gew.-% einer Pfropfgrundlage b1 erhalten durch Polymerisation von: b11: 100 Gew.-% Butadien; und
b2: 20 bis 50 Gew.-% einer Pfropfauflage b2 erhalten durch Polymerisation von:
   b21: 70 bis 90 Gew.-%, insbesondere 72,5 bis 85 Gew.-% Styrol,
   b22: 10 bis 30 Gew.-%, insbesondere 15 bis 27,5 Gew.-% Acrylnitril.

Als Pfropfgrundlage b1 können handelsübliche Butadien- oder Butadien-Styrol-Kautschuke, bevorzugt Butadien-Kautschuke, eingesetzt werden.

Geeignete Butadien-Kautschuke b1 und ABS-Pfropfcopolymere bzw. ABS-Schlagzähmodifikatoren b werden in der EP 0 993 476 B1 und in der Druckschrift WO 01/62848 A1 beschrieben.

Bei der Weichkomponente handelt es sich bevorzugt um ein mehrstufig aufgebautes Copolymer (sog. "Kern/Schale-Aufbau", "core/shell morphology"). Beispielsweise kann ein kautschukelastischer Kern (Glastemperatur TG <50°C) von einer "harten" Schale (Polymere mit TG >50°C) oder umgekehrt umhüllt sein. Derartige Kern-Schale-Pfropfcopolymere sind bekannt.

Verfahren zur Herstellung der Pfropfcopolymere bzw. Schlagzähmodifikatoren b sind dem Fachmann bekannt und in der Literatur beschrieben. Entsprechende Produkte sind zum Teil kommerziell erhältlich. Als besonders vorteilhaft hat sich die Herstellung durch Emulsionspolymerisation erwiesen (EP 0 993 476 B1 und WO 01/62848 A1).

Üblicherweise polymerisiert man bei 20 bis 100°C, bevorzugt 30 bis 80°C. In der Regel werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze, insbesondere die Na- und K-Salze, von Alkylsulfonaten oder Fettsäuren mit 10 bis 18 Kohlenstoffatomen.

In der Regel werden die Emulgatoren in Mengen von 0,5 bis 5 Gew.-%, insbesondere von 0,5 bis 3 Gew.-%, bezogen auf die bei der Herstellung der Pfropfgrundlage b1 eingesetzten Monomeren, eingesetzt.

Vorzugsweise verwendet man zur Herstellung der Dispersion soviel Wasser, dass die fertige Dispersion einen Feststoffgehalt von 20 bis 50 Gew.-% hat. Üblicherweise wird bei einem Wasser/Monomeren-Verhältnis von 2 : 1 bis 0,7 : 1 gearbeitet.

Zum Starten der Polymerisationsreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.

In der Regel werden die Polymerisationsinitiatoren in einer Menge von 0,1 bis 1 Gew.-%, bezogen auf die Pfropfgrundlage-Monomeren b11) und b12), eingesetzt.

Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z. B. auf- oder absteigend, linear oder exponentiell, oder auch stufenweise (Treppenfunktion) sein kann.

Ferner kann man Molekulargewichtsregler wie z. B. Ethylhexylthioglycolat, n- oder t-Dodecylmercaptan oder andere Mercaptane, Terpinole und dimeres alpha-Methylstyrol oder andere, zur Regelung des Molekulargewichts geeigneten Verbindungen, mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie Na₂HPO₄/NaH₂PO₄, Natriumhydrogencarbonat oder Puffer auf Basis Citronensäure/Citrat, mitverwenden. Regler und Puffersubstanzen werden in den üblichen Mengen eingesetzt, so dass sich nähere Angaben hierzu erübrigen.

In einer besonderen bevorzugten Ausführungsform fügt man während der Pfropfung der Pfropfgrundlage b1 mit den Monomeren b21) bis b22) ein Reduktionsmittel zu.

Man kann die Pfropfgrundlage b1 in einer besonderen Ausführungsform auch durch Polymerisation der Monomeren b11) bis b12) in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saat-Latices bestehen beispielsweise aus Polybutadien oder Polystyrol.

Bei der Saatpolymerisationstechnik wird üblicherweise zunächst ein feinteiliges Polymer, vorzugsweise ein Polybutadien, als Saatlatex hergestellt und dann durch Weiterumsatz mit Butadien enthaltenden Monomeren zu größeren Teilchen weiterpolymerisiert wird (siehe z. B. in Houben Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-Zulauf-Verfahrens gearbeitet.

Durch den Einsatz von - insbesondere Polybutadien - Saatlatices mit einem mittleren Teilchendurchmesser d₅₀ von 25 bis 200 nm, vorzugsweise von 30 bis 180 nm und besonders bevorzugt von 60 bis 170 nm, lassen sich Polybutadien-Latices b1 mit einem mittleren Teilchendurchmesser d₅₀ von 200 bis 600 nm, vorzugsweise 230 bis 480 nm, besonders bevorzugt von 240 bis 470 nm, ganz besonders bevorzugt von 250 bis 460 nm, erhalten.

Bei Verwendung von Saatlatices mit mittleren Teilchendurchmessern d₅₀ oberhalb 80 nm, vorzugsweise oberhalb 90 nm und besonders bevorzugt oberhalb 100 nm werden auch die Saatlatices selbst vorzugsweise durch Saatpolymerisation hergestellt. Dazu werden vorzugsweise Saatlatices mit mittleren Teilchendurchmessern d₅₀ von 10 bis 60 nm, vorzugsweise 20 bis 50 nm, eingesetzt.

Bevorzugte Pfropfgrundlagen b1 und Pfropfcopolymere bzw. Schlagzähmodifkatoren b können durch die in dem Dokument WO 01/62848A1 beschriebene Saatpolymerisationstechnik erhalten werden.

In einer anderen bevorzugten Ausführungsform kann man die Pfropfgrundlage b1 im sogenannten Zulaufverfahren herstellen.

Bei diesem Verfahren wird ein bestimmter Anteil der Monomeren b11) und gegebenenfalls b12) vorgelegt und die Polymerisation gestartet, wonach man den Rest der Monomeren b11) und gegebenenfalls b12) ("Zulaufanteil") als Zulauf während der Polymerisation zufügt.

Die Zulaufparameter (Gestalt des Gradienten, Menge, Dauer, etc.) hängen von den anderen Polymerisationsbedingungen ab. Sinngemäß gelten auch hier die zur Zugabeweise des Radikalstartes bzw. Emulgators gemachten Ausführungen. Bevorzugt beträgt beim Zulaufverfahren der vorgelegte Anteil der Monomeren b11) 5 bis 50 Gew.-%, besonders bevorzugt 8 bis 40 Gew.-%, bezogen auf b1. Bevorzugt lässt man den Zulaufanteil von b11) und gegebenenfalls b12) innerhalb 1-18 Stunden, insbesondere 2-16 Stunden, ganz besonders 4 bis 12 Stunden, zulaufen.

Weiterhin eignen sich auch Pfropfpolymere mit mehreren "weichen" und "harten" Schalen, z. B. des Aufbaus b1) -b2) -b1) -b2), oder b2) -b1) -b2), vor allem im Falle größerer Teilchen.

Die genauen Polymerisationsbedingungen, insbesondere Art, Menge und Dosierung des Emulgators und der anderen Polymerisationshilfsstoffe werden bevorzugt so gewählt, dass der erhaltene Latex des Pfropfcopolymers b bzw. des Schlagzähmodifikators b, eine mittlere Teilchengröße, definiert durch den d₅₀-Wert der Teilchengrößenverteilung, von 80 bis 1000 nm, bevorzugt 85 bis 600 nm, und besonders bevorzugt 90 bis 500 nm aufweist.

Man kann die Polymerisationsbedingungen auch so aufeinander abstimmen, dass die Polymerteilchen eine bimodale Teilchengrößenverteilung aufweisen, also eine Größenverteilung mit zwei mehr oder weniger ausgeprägten Maxima. Das erste Maximum ist deutlicher ausgeprägt (vergleichsweise schmaler Peak) als das zweite und liegt in der Regel bei 25 bis 200 nm, bevorzugt 60 bis 170 nm, besonders bevorzugt 70 bis 150 nm. Das zweite Maximum ist vergleichsweise breit und liegt in der Regel bei 150 bis 800 nm, bevorzugt 180 bis 700 nm, besonders bevorzugt 200 bis 600 nm, ganz besonders bevorzugt 250 nm bis 460 nm. Dabei liegt das zweite Maximum (150 bis 800 nm) bei größeren Teilchengrößen als das erste Maximum (25 bis 200 nm).

Oftmals liegt bei einer bimodalen Teilchengrößenverteilung das erste Maximum (b1') der Pfropfgrundlage b1 bei einer mittleren Teilchengröße d₅₀ von 25 bis 200 nm, bevorzugt 30 bis 180 nm, besonders bevorzugt 60 bis 170 nm, und das zweite Maximum (b1") der Pfropfgrundlage b1 bei einer mittleren Teilchengröße d₅₀ von 230 bis 480 nm, ganz besonders bevorzugt 240 bis 470 nm, ganz besonders bevorzugt 250 bis 460 nm.

Gemäß einer weiteren Ausführungsform ist die Teilchengrößenverteilung der Pfropfgrundlage b1 trimodal: das erste Maximum (b1') der Pfropfgrundlage b1 liegt bei einer mittleren Teilchengröße d₅₀ von 25 bis 200 nm, bevorzugt 30 bis 180 nm, besonders bevorzugt 60 bis 170 nm, und das zweite Maximum (b1") der Pfropfgrundlage b1 bei einem mittleren Teilchendurchmesser d₅₀ von 230 bis 330 nm, vorzugsweise von 240 bis 320 nm und besonders bevorzugt von 250 bis 310 nm, und das dritte Maximum (b1''') besitzt einen mittleren Teilchendurchmesser d₅₀ von 340 bis 480 nm, vorzugsweise von 350 bis 470 nm und besonders bevorzugt von 360 bis 460 nm.

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren b11) und gegebenenfalls b12), welche den Kern aufbauen, bis zu einem Umsatz von üblicherweise mindestens 90, bevorzugt grösser 95%, bezogen auf die eingesetzten Monomeren. Dieser Umsatz ist in der Regel nach 4 bis 20 Stunden erreicht. Der erhaltene Kautschuklatex hat eine mittlere Teilchengröße d₅₀ von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymers. Vorzugsweise werden Dispersionen von Copolymeren von (C₁-C₄-Alkyl)estern der Acrylsäure, vorzugsweise von Ethylacrylat, mit 0,1 bis 10 Gew.-% polare Polymere bildenden Monomeren, wie z. B. Acrylsäure, Methacrylsäure, Acrylamid oder Methacrylamid, N-Methylolmethacrylamid oder N-Vinylpyrrolidon, eingesetzt. Besonders bevorzugt ist ein Copolymer aus 96% Ethylacrylat und 4% Methacrylamid. Die Agglomerier-Dispersion kann gegebenenfalls auch mehrere der genannten Acrylesterpolymere enthalten.

Die Konzentration der Acrylesterpolymere in der zur Agglomeration verwendeten Dispersion soll im Allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im Allgemeinen dauert sie etwa 1 bis 30 Minuten bei einer Temperatur zwischen 20 und 90°C, vorzugsweise zwischen 30 und 75°C.

Außer mittels einer Acrylesterpolymer-Dispersion kann der Kautschuklatex auch durch andere Agglomeriermittel wie z.B. Essigsäureanhydrid, agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so dass eine bimodale Verteilung entsteht. Dabei liegen nach der Agglomeration im Allgemeinen mehr als 50%, vorzugsweise zwischen 75 und 95% der Teilchen (Zahlen-Verteilung) im nicht agglomerierten Zustand vor. Der erhaltene teilagglomerierte Kautschuklatex ist verhältnismäßig stabil, so dass er ohne weiteres gelagert und transportiert werden kann, ohne dass Koagulation eintritt.

Um eine bimodale Teilchengrößenverteilung des Pfropfcopolymers b zu erzielen, ist es auch möglich, zwei verschiedene Pfropfpolymerisate b' und b", die sich in ihrer mittleren Teilchengröße unterscheiden, getrennt voneinander in üblicher Weise herzustellen und die Pfropfcopolymere b' und b" im gewünschten Mengenverhältnis zusammenzugeben.

Um eine trimodale Teilchengrößenverteilung des Pfropfcopolymers b zu erzielen, ist es auch möglich, zwei verschiedene Pfropfgrundlagen b1' und b1", die sich in ihrer mittleren Teilchengröße unterscheiden, getrennt voneinander in üblicher Weise herzustellen, die Pfropfgrundlagen vor der Pfropfung (oder gegebenenfalls auch danach) im gewünschten Verhältnis zusammenzubringen und dann die Pfropfauflage aufzupfropfen und danach zu den so erhaltenen Pfropfcopolymeren b' und b" ein drittes, getrennt hergestelltes, Pfropfcopolymer b''', das sich von b' und b" in seiner mittleren Teilchengröße unterscheidet, im gewünschten Mengenverhältnis hinzuzufügen.

Die Bestimmung des mittleren Teilchendurchmessers d₅₀ kann durch Ultrazentrifugenmessung ermittelt werden (vgl. W. Scholtan, H. Lange : Kolloid Z. u. Z. Polymere 250, S. 782 bis 796 (1972)); die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern zur Erzielung eines niedrigen Gelgehaltes).

Üblicherweise wird die Polymerisation der Pfropfgrundlage b1 durch Wahl der Reaktionsbedingungen so geführt, dass eine Pfropfgrundlage mit einem bestimmten Vernetzungszustand resultiert. Als hierfür wesentliche Parameter sind beispielhaft anzuführen die Reaktionstemperatur und -dauer, das Verhältnis von Monomeren, Regler, Radikalstarter und beispielsweise beim Zulaufverfahren, die Zulaufgeschwindigkeit und die Menge und der Zugabezeitpunkt von Regler und Initiator.

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der QI der erfindungsgemäßen Formmassen im Bereich QI = 10 bis 60, bevorzugt bei 15 bis 55 und besonders bevorzugt bei 20 bis 50.

Eine andere Methode zur Charakterisierung des Vernetzungszustandes ist die Messung von NMR-Relaxationszeiten der beweglichen Protonen, die sog. T2-Zeiten. Je stärker vernetzt ein bestimmtes Netzwerk ist, desto niedriger liegen seine T2-Zeiten. Übliche T2-Zeiten für die erfindungsgemäßen Pfropfgrundlagen b1 sind T2-Zeiten im Bereich 2,0 bis 4,5 ms, bevorzugt 2,5 bis 4,0 ms und besonders bevorzugt 2,5 bis 3,8 ms, gemessen an verfilmten Proben bei 80°C.

Ein weiteres Maß für die Charakterisierung der Pfropfgrundlage und deren Vernetzungszustand ist der Gelgehalt, d. h. derjenige Produktanteil, der vernetzt und damit in einem bestimmten Lösemittel nicht löslich ist. Sinnvollerweise wird der Gelgehalt im gleichen Lösemittel wie der Quellungsindex bestimmt.

Übliche Gelgehalte der erfindungsgemäß eingesetzten Pfropfgrundlagen b1 liegen im Bereich 50 bis 90%, bevorzugt 55 bis 85% und besonders bevorzugt 60 bis 80%.

Die Bestimmung des Quellungsindex geschieht beispielsweise nach folgendem Verfahren: ca. 0,2 g des Feststoffes einer durch Verdampfen des Wassers verfilmten Pfropfgrundlagendispersion werden in einer genügend großen Menge (z. B. 50 g) Toluol angequollen. Nach z. B. 24 h wird das Toluol abgesaugt und die Probe ausgewogen. Nach Trocknen der Probe im Vakuum wird erneut ausgewogen. Der Quellungsindex ist das Verhältnis der Auswaage nach dem Quellungsvorgang zu der Auswaage trocken nach der erneuten Trocknung. Dementsprechend errechnet sich der Gelanteil aus dem Verhältnis der Trockenauswaage nach dem Quellschritt zur Einwaage vor dem Quellschritt (x 100%).

Die Bestimmung der T2-Zeit geschieht durch Messen der NMR-Relaxation einer entwässerten und verfilmten Probe der Pfropfgrundlagendispersion. Hierzu wird beispielsweise die Probe nach Ablüften über Nacht bei z.B. 60°C 3 h im Vakuum getrocknet und dann mit einem geeigneten Messgerät, z.B. minispec-Gerät der Fa. Brucker, bei 80°C vermessen. Vergleichbar sind nur Proben, die nach der gleichen Methode vermessen wurden, da die Relaxation deutlich temperaturabhängig ist.

Die Herstellung der Pfropfauflage b2 kann unter den gleichen Bedingungen wie die Herstellung der Pfropfgrundlage b1 erfolgen, wobei man die Auflage b2 in einem oder mehreren Verfahrensschritten herstellen kann.

Beispielsweise kann man bei einer zweistufigen Pfropfung zunächst Styrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfcopolymeren bzw. der Schlagzähmodifikatoren b, sind in DE 12 60 135 und DE 31 49 358 beschrieben.

Es ist vorteilhaft, die Pfropfpolymerisation auf die Pfropfgrundlage b1 wiederum in wässriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage b1 verwendeten Emulgatoren bzw. Initiatoren nicht identisch sein. So kann z.B. zweckmäßig sein, als Initiator für die Herstellung der Pfropfgrundlage b1 ein Persulfat zu verwenden, zur Polymerisation der Pfropfhülle b2 jedoch ein Redoxinitiator-System einzusetzen. Im Übrigen gilt für die Wahl von Emulgator, Initiator und Polymerisationshilfsstoffen das bei der Herstellung der Pfropfgrundlage b1 gesagte. Das aufzupfropfende Monomerengemisch kann dem Reaktionsgemisch auf einmal, absatzweise in mehreren Stufen oder vorzugsweise kontinuierlich während der Polymerisation zugegeben werden.

Soweit bei der Pfropfung der Pfropfgrundlage b1 nicht gepfropfte Polymere aus den Monomeren b21) bis b22) entstehen, werden die Mengen, die in der Regel unter 10 Gew.-% von b2 liegen, der Masse der Komponente b zugeordnet.

### Polyamid B

Als Komponente B enthalten die erfindungsgemäß eingesetzten Formmassen ein oder mehrere, bevorzugt ein, Polyamide B. Polyamide und deren Herstellung sind dem Fachmann bekannt und in der Literatur beschrieben (s. beispielsweise Polyamide, Kunststoff-Handbuch 3/4, Carl Hanser Verlag (7/98); US-B 6812323; WO 95/28443; WO 99/41297).

Unter Polyamiden B werden Homopolymere oder Copolymere verstanden, die als wesentlichen Bestandteil wiederkehrend Amid-Gruppen in der Polymer-Hauptkette aufweisen. Erfindungsgemäß eingesetzt werden ein oder mehrere Polyamide B ausgewählt aus: Polyamid 6 (Polycaprolactam), Polyamid 6,6 (Polyhexamethylenadipamid), Polyamid 4,6 (Polytetramethylenadipamid), Polyamid 5,10 (Polypentamethylenadipamid), Polyamid 6,10 (Polyhexamethylensebacamid), Polyamid 7 (Polyenantholactam), Polyamid 11 (Polyundecanolactam) und Polyamid 12 (Polydodecanolactam).

Bevorzugt wird als Komponente B Polyamid 6 und/oder Polyamid-6,6, besonders bevorzugt Polyamid 6, eingesetzt.

Als Ausgangsmonomere oder Ausgangsoligomere zur Herstellung der vorgenannten Polyamide eignen sich beispielsweise Monomere oder Oligomere von Aminosäuren, wie 6-Aminocapronsäure, 11-Aminoundecansäure, sowie deren Dimere, Trimere, Tetramere, Pentamere oder Hexamere; Monomere oder Oligomere von Aminosäureamiden, wie 6-Aminocapronsäureamid, 11-Aminoundecansäureamid sowie deren Dimere, Trimere, Tetramere, Pentamere oder Hexamere; Monomere oder Oligomere eines Alkyldiamins, wie Tetramethylendiamin oder vorzugsweise Hexamethylendiamin, mit einer aliphatischen Dicarbonsäure, wie Sebacinsäure, Decandicarbonsäure oder Adipinsäure, sowie deren Dimere, Trimere, Tetramere, Pentamere oder Hexamere; Monomere oder Oligomere eines aliphatischen Lactams, wie Enantholactam, Undecanolactam, Dodecanolactam oder Caprolactam, sowie Homopolymere, Copolymere oder Mischungen solcher Ausgangsmonomere oder Ausgangsoligomere.

Die Molekulargewichte Mn (Zahlenmittel) der als Komponente B geeigneten Polyamide liegen bevorzugt im Bereich zwischen 5.000 und 100.000, besonders bevorzugt zwischen 10.000 und 80.000.

Bevorzugt sind Polyamide B mit einer relativen Viskosität von 2,2 bis 4,5, gemessen in 0,5%iger Lösung (0,5 g/100 ml) in 96 gew.-%iger Schwefelsäure bei 25°C.

Polyamid 6 ist zum Beispiel als Ultramid® B von der BASF SE (Ludwigshafen) im Handel erhältlich.

### Verträglich keitsvermittler C

Erfindungsgemäß als Verträglichkeitsvermittler C eingesetzte Styrol-Acrylnitril-Maleinsäureanhydrid-(SANMSA)-Terpolymere C enthalten im Allgemeinen 72 bis 84,5 Gew.-%, bevorzugt 74 bis 84 Gew.-% Styrol C1; 15 bis 27,5 Gew.-%, bevorzugt 15 bis 25 Gew.-% Acrylnitril C2; und 0,5 bis 5 Gew.-%, bevorzugt 1 bis 3 Gew.-% Maleinsäureanhydrid (MSA) C3, wobei die Summe aus C1, C2 und C3 100 Gew.-% ergibt.

Die SANMSA-Terpolymere C weisen im Allgemeinen eine mittlere Molmasse Mw von 30 000 bis 500 000 g/mol, vorzugsweise von 50 000 bis 250 000 g/mol, besonders bevorzugt von 70 000 bis 200 000 g/mol auf. Die Bestimmung der gewichtsmittleren Molmasse Mw erfolgt mittels GPC (Lösungsmittel: Tetrahydrofuran, Polystyrol als Polymerstandard) mit UV-Detektion (DIN EN ISO 16014-5:2012-10).

Die SANMSA-Terpolymere C werden in bekannter Weise durch Masse-, Lösungs-, Suspensions-, Fällungs- oder Emulsionspolymerisation erhalten, wobei Masse- und Lösungspolymerisation bevorzugt sind. Einzelheiten dieser Verfahren sind z.B. im Kunststoffhandbuch, Hrg. R. Vieweg und G. Daumiller, Bd. 4 "Polystyrol", Carl-Hanser-Verlag München 1996, S. 104 ff sowie in "Modern Styrenic Polymers: Polystyrenes and Styrenic Copolymers" (Eds., J. Scheirs, D. Priddy, Wiley, Chichester, UK, (2003), Seiten 27 bis 29) und in GB-A 1472195 beschrieben.

### Hilfsmittel D

Die erfindungsgemäß eingesetzte Formmasse enthält ein oder mehrere Hilfsmittel D ausgewählt aus: Stabilisatoren, Oxidationsverzögerern, Mitteln gegen Wärmezersetzung und Zersetzung durch ultraviolettes Licht, Gleit- und Entformungsmitteln, Verarbeitungshilfsmitteln und Weichmachern. Die Gesamtmenge der Hilfsmittel D beträgt im Allgemeinen 0,01 bis 5 Gew.-%, insbesondere 0,05 bis 3 Gew.-%, bezogen auf das Gewicht der thermoplastischen Formmasse.

Bevorzugt enthält die Formmasse als Hilfsmittel D Stabilisatoren, Oxidationsverzögerer, Mittel gegen Wärmezersetzung und Zersetzung durch ultraviolettes Licht.

Oftmals werden 2 oder mehr verschiedene der vorgenannten Hilfsmittel D eingesetzt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse, genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca-, Mg- oder Zn-Stearat) oder Ester (z.B. Stearylstearat oder Pentaerythrittetrastearat) sowie Amidderivate (z.B. Ethylenbisstearylamid).

Als Verarbeitungshilfsmittel kann beispielsweise Mineralöl, vorzugsweise medizinisches Weißöl, in Mengen bis zu 5 Gew.-%, vorzugsweise bis zu 2 Gew.-% eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

### Additive E

Die erfindungsgemäß eingesetzte Formmasse kann ferner gegebenenfalls ein oder mehrere übliche, von den Hilfsmitteln D verschiedene, Additive E wie Färbemittel, Farbstoffe und Pigmente, faser- und pulverförmige Füll- und Verstärkungsmittel, Keimbildungsmittel, Flammschutzmittel usw. enthalten, deren Anteil in der Regel nicht mehr als 30 Gew.-%, bevorzugt nicht mehr als 20 Gew.-%, besonders bevorzugt nicht mehr als 10 Gew.-% beträgt, bezogen auf die gesamte Formmasse.

Falls ein oder mehrere Additive E in der Formmasse vorhanden sind, beträgt deren Mindestanteil üblicherweise 0,01 Gew.-%, bevorzugt 0,05 Gew.-%, besonders 0,1 Gew.-%.

Als Farbstoffe können organische Farbstoffe wie Nigrosin, Pigmente wie Titandioxid, Phthalocyanine, Ultramarinblau und Ruß zugesetzt werden, sowie faser- und pulverförmige Füllstoffe und Verstärkungsmittel. Beispiele für letztere sind Kohlenstoffasern, Glasfasern, amorphe Kieselsäure, Calciumsilikat (Wollastonit), Aluminiumsilikat, Magnesiumcarbonat, Kaolin, Kreide, gepulverter Quarz, Glimmer und Feldspat. Der Anteil derartiger Füll- und Farbstoffe beträgt im Allgemeinen bis zu 30 Gew.-%, bevorzugt bis zu 20 Gew.-%, besonders bevorzugt bis zu 10 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Zur besseren Verarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

### Herstellung der Formmassen

Die Herstellung der erfindungsgemäß eingesetzten Formmassen aus den Komponenten A, B, C, D und gegebenenfalls E kann nach allen bekannten Methoden erfolgen.

Zur Herstellung der thermoplastischen Formmassen ist im Einzelnen das Folgende auszuführen:
Die Pfropfcopolymere bzw Schlagzähmodifikatoren b mit uni-, bi- oder trimodaler Teilchengrößenverteilung werden nach dem Verfahren der Emulsionspolymerisation hergestellt, wie es bereits oben beschrieben wurde. Die gewünschte Teilchengrößenverteilung kann, wie bereits beschrieben, durch geeignete, dem Fachmann geläufige, Maßnahmen eingestellt werden.

Die erhaltene Dispersion der Pfropfpolymere bzw Schlagzähmodifikatoren b kann entweder direkt mit den Komponenten a, B, C und/oder D, sowie gegebenenfalls E, vermischt werden, oder sie kann zuvor aufgearbeitet werden. Letzteres Vorgehen ist bevorzugt.

Die Aufarbeitung der Dispersion der Pfropfcopolymere bzw. Schlagzähmodifikatoren b erfolgt in an sich bekannter Weise. Üblicherweise wird zunächst das Pfropfcopolymer b aus der Dispersion ausgefällt, beispielsweise durch Zugabe von fällend wirkenden Salzlösungen (wie Calciumchlorid, Magnesiumsulfat, Alaun) oder Säuren (wie Essigsäure, Salzsäure oder Schwefelsäure) oder auch durch Einfrieren (Gefrierkoagulation) Die wässrige Phase kann in üblicher Weise, etwa durch Sieben, Filtrieren, Dekantieren oder Zentrifugieren, abgetrennt werden. Man erhält durch diese vorherige Abtrennung des Dispersionswassers wasserfeuchte Pfropfcopolymere bzw Schlagzähmodifikatoren b mit einem Restwassergehalt von bis zu 60 Gew.-%, bezogen auf b, wobei das Restwasser z. B. sowohl am Pfropcopolymer b äußerlich anhaften als auch darin eingeschlossen sein kann.

Das Pfropfcopolymer b kann danach erforderlichenfalls in bekannter Weise weiter getrocknet werden, z. B. durch Warmluft oder mittels eines Stromtrockners. Ebenso ist es möglich, die Dispersion durch Sprühtrocknung aufzuarbeiten.

Die Pfropfcopolymere b werden üblicherweise mit dem SAN-Copolymer a, dem Polyamid B und den weiteren Komponenten C, D und gegebenenfalls E, in einer Mischvorrichtung vermischt, wobei eine im Wesentlichen schmelzflüssige Polymermischung entsteht.

"Im wesentlichen schmelzflüssig" bedeutet, dass die Polymermischung neben dem überwiegenden, schmelzflüssigen (erweichten) Anteil noch einen gewissen Anteil fester Bestandteile enthalten kann, beispielsweise ungeschmolzene Füll- und Verstärkungsstoffe wie Glasfasern, Pigmente, Farbstoffe etc. "Schmelzflüssig" bedeutet, dass die Polymermischung zumindest zähflüssig ist, sie also zumindest in dem Maß erweicht ist, dass sie plastische Eigenschaften hat.

Als Mischvorrichtungen werden solche verwendet, die dem Fachmann bekannt sind. Man kann die Komponenten a, b, B, C, D und E beispielsweise durch gemeinsames Extrudieren, Kneten oder Verwalzen vermischen, wobei die vorgenannten Komponenten notwendigenfalls zuvor aus der bei der Polymerisation erhaltenen Lösung oder aus der wässrigen Dispersion isoliert worden sind.

Im Falle des Einmischens einer oder mehrerer Komponenten in Form einer wässrigen Dispersion bzw. einer wässrigen oder nichtwässrigen Lösung, wird das Wasser bzw. das Lösungsmittel über eine Entgasungseinheit aus der Mischvorrichtung, bevorzugt einem Extruder, entfernt.

Als Mischvorrichtungen für die Durchführung des Verfahrens sind beispielsweise diskontinuierlich arbeitende, beheizte Innenkneter mit oder ohne Stempel, kontinuierlich arbeitende Kneter wie z.B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.

In manchen Fällen bewirkt die beim Vermischen durch die Mischvorrichtung eingebrachte mechanische Energie bereits ein Schmelzen der Mischung, so dass die Mischvorrichtung nicht beheizt werden muss. Ansonsten wird die Mischvorrichtung in der Regel beheizt. Die Temperatur richtet sich nach den chemischen und physikalischen Eigenschaften der Komponenten a und b, und - sofern enthalten - B und/oder C, und ist so zu wählen, dass eine im Wesentlichen schmelzflüssige Polymermischung entsteht. Andererseits soll die Temperatur nicht unnötig hoch sein, um eine thermische Schädigung der Polymermischung zu vermeiden. Die eingebrachte mechanische Energie kann jedoch auch so hoch sein, dass die Mischvorrichtung sogar gekühlt werden muss. Üblicherweise betreibt man die Mischvorrichtung bei 160 bis 400, bevorzugt 180 bis 300°C.

In einer bevorzugten Ausführungsform erfolgt das Vermischen des Pfropfpolymers b mit dem SAN-Copolymer a, dem Polyamid B und den weiteren Komponenten C,D und gegebenenfalls E, in einem Extruder, wobei die Dispersion des Pfropfcopolymers b ohne vorherige Abtrennung des Dispersionswassers direkt in den Extruder eindosiert wird. Das Wasser wird üblicherweise entlang des Extruders über geeignete Entgasungsvorrichtungen entfernt. Als Entgasungsvorrichtungen können beispielsweise Entgasungsöffnungen, die mit Rückhalteschnecken versehen sind (welche das Austreten der Polymermischung verhindern), eingesetzt werden.

In einer anderen, ebenfalls bevorzugten Ausführungsform erfolgt das Vermischen der vorgenannten Komponenten, in einem Extruder, wobei das Pfropfcopolymer b zuvor vom Dispersionswasser abgetrennt wird. Man erhält durch diese vorherige Abtrennung des Dispersionswassers wasserfeuchte Pfropfcopolymere b mit einem Restwassergehalt von bis zu 60 Gew.-%, bezogen auf b. Das vorhandene Restwasser kann dann, wie zuvor beschrieben, über Entgasungseinrichtungen des Extruders als Dampf entfernt werden. Besonders bevorzugt wird jedoch das Restwasser im Extruder nicht allein als Dampf entfernt, sondern es wird ein Teil des Restwassers mechanisch im Extruder entfernt und verlässt den Extruder in flüssiger Phase.

Bei diesem sogenannten Abquetschverfahren (EP-B 0 993 476, S. 13-16) werden dem gleichen Extruder das SAN-Copolymer a, das Polyamid B, und die Komponenten C, D und optional E zugeführt, so dass als Produkt des Verfahrens die fertige Formmasse extrudiert wird.

Die erfindungsgemäß eingesetzte Formmasse zeichnet sich auch dadurch aus, dass deren Restmonomergehalt nicht mehr als 2000 ppm, vorzugsweise nicht mehr als 1000 ppm, besonders bevorzugt nicht mehr als 500 ppm beträgt. Unter Restmonomergehalt ist der Anteil an nicht umgesetzten (nicht einpolymerisierten) Monomeren in der Formmasse zu verstehen.

Ferner zeichnet sich die erfindungsgemäß eingesetzte Formmasse dadurch aus, dass deren Lösungsmittelgehalt wie z.B. von Ethylbenzol, Toluol usw. nicht mehr als 1000 ppm, vorzugsweise nicht mehr als 500 ppm, besonders bevorzugt nicht mehr als 200 ppm beträgt.

Der geringe Restmonomer- und Lösungsmittelgehalt kann dadurch erzielt werden, dass übliche Verfahren zur Reduzierung von Restmonomeren und Lösungsmitteln aus Polymerschmelzen, wie z.B. im Kunststoffhandbuch, Hrg. R. Vieweg und G. Daumiller, Bd. 4 "Polystyrol", Carl-Hanser-Verlag München (1996), S. 121 bis 139 beschrieben, angewandt werden. In diesen Verfahren werden typische Entgasungsapparate wie beispielsweise Teilverdampfer, Flachverdampfer, Strangentgaser, Dünnschichtverdampfer oder Entgasungsextruder eingesetzt. Durch den geringen Restmonomergehalt sowie Lösungsmittelgehalt ist die erfindungsgemäß eingesetzte Formmasse geruchsarm und eignet sich daher hervorragend für 3D-Drucker im Heimanwendungsbereich (home-use) sowie für industriell eingesetzte 3D-Drucker.

Darüber hinaus enthält die Formmasse nicht mehr als 500 ppm, bevorzugt nicht mehr als 400 ppm, besonders bevorzugt nicht mehr als 300 ppm von Übergangsmetallen wie beispielsweise Fe, Mn und Zn. Formmassen mit einem solchen niedrigen Gehalt an Übergangsmetallen lassen sich beispielsweise dadurch erhalten, dass, falls zum Starten der Polymerisation der in der Formmasse enthaltenen Polymere Redoxinitiatoren eingesetzt werden, diese Redoxinitiatoren nur in geringen Mengen in Kombination mit Peroxiden verwendet werden. Weiterhin sollten deshalb in der Formmasse nur geringe Mengen an übergangsmetallhaltigen Mineralien (z.B. Pigmente) enthalten sein.

Die Viskosität der gesamten Formmasse ist bei Scherraten von 1 bis 10 1/s und bei Temperaturen von 250 °C nicht höher als 1x10⁵ Pa*s, vorzugsweise nicht höher als 1x10⁴ Pa*s, besonders bevorzugt nicht höher als 1x10³ Pa*s.

Die Melt Volume Rate (MVR, gemessen nach ISO 1133-1:2011 bei 240°C und 10 kg Last) der erfindungsgemäß verwendeten Formmasse beträgt im Allgemeinen mehr als 15 ml/10 min, bevorzugt mehr als 20 ml/10 min.

Die vorgenannten Formmassen werden erfindungsgemäß zur Herstellung von dreidimensionalen Objekten von vorbestimmter Form (Formkörpern) mit Hilfe einer Vorrichtung für den 3D-Druck verwendet.

Bevorzugt ist die Verwendung der vorgenannten Formmasse in 3D-Druckern, die für das Fused Deposition Modeling-(FDM)-Verfahren geeignet sind.

Dabei können übliche für den 3D-Druck geeignete Vorrichtungen, insbesondere 3D-Drucker für die Heimanwendung (home-use), eingesetzt werden. Ebenfalls geeignet sind 3D-Drucker für den industriellen Bereich.

Der Aufbau des dreidimensionalen Objektes erfolgt im Allgemeinen computergesteuert aus der erfindungsgemäß verwendeten verflüssigten Formmasse nach vorgegebenen Maßen und Formen (CAD).

Zur Herstellung des dreidimensionalen Objektes können übliche Verfahren des 3D-Drucks gemäß dem Stand der Technik wie z.B. in EP 1015215 B1 und US 2009/0295032 A1 beschrieben verwendet werden.

Üblicherweise wird zunächst die erfindungsgemäß verwendete Formmasse verflüssigt und extrudiert, mehrere Schichten der Formmasse werden auf eine Basis wie einen Träger oder eine vorhergehende Schicht der Formmasse aufgebracht, und dann wird das geformte Material durch Kühlen unter die Erstarrungstemperatur der Formmasse verfestigt.

Gemäß einer bevorzugten Ausführungsform wird in einem 3D-Drucker mit einer in der Fertigungsebene frei beweglichen Heizdüse ein zugeführtes Filament aus der erfindungsgemäßen Formmasse verflüssigt, die verflüssigte Formmasse extrudiert und schichtweise mit Hilfe des Fused Deposition Modeling Verfahrens aufgetragen und, gegebenenfalls durch Kühlung, verfestigt. Die Düsentemperatur beträgt im Allgemeinen 200 bis 270°C, bevorzugt 230 bis 250°C, insbesondere 240°C.

Die erfindungsgemäß verwendeten Formmassen weisen ein optimiertes Zähigkeits/Viskositätsverhältnis auf und eignen sich von daher hervorragend für den 3D-Druck. Aus den vorgenannten Formmassen lassen sich durch 3D-Druck dreidimensionale Objekte erhalten, die sich durch eine hohe Qualität auszeichnen, d.h. geringen Verzug, hohe Dimensionsstabilität und gute Schichtenhaftung der Kontaktfläche zwischen den Schichten.

Besonders bevorzugt ist die Verwendung der vorgenannten Formmassen für den 3D-Druck von dreidimensionalen Objekten mit Brückenbildung. Die Erfindung wird durch die nachfolgenden Beispiele und die Ansprüche näher beschrieben.

### Beispiele

Die folgenden Formmassen wurden in den Beispielen und Vergleichsbeispielen verwendet und untersucht:
1A: Formmasse aus 85 Gew.-% SAN-Copolymer a1 und 15 Gew.-% ABS-Pfropfcopolymer, MVR (cm³/10 min): 55
1B: Formmasse aus 85 Gew.-% SAN-Copolymer a2 und 15 Gew.-% ABS-Pfropfcopolymer, MVR (cm³/10 min): 37
1C: Formmasse aus 85 Gew.-% SAN-Copolymer a3 und 15 Gew.-% ABS-Pfropfcopolymer, MVR (cm³/10 min): 9
1D: Formmasse aus 85 Gew.-% SAN-Copolymer a4 und 15 Gew.-% ABS-Pfropfcopolymer, MVR (cm³/10 min): 12
1E: Formmasse aus 85 Gew.-% SAN-Copolymer a5 und 15 Gew.-% ABS-Pfropfcopolymer, MVR (cm³/10 min): 43
2A: Formmasse aus 70 Gew.-% SAN-Copolymer a1 und 30 Gew.-% ABS-Pfropfcopolymer, MVR (cm³/10 min): 36
2B: Formmasse aus 70 Gew.-% SAN-Copolymer a2 und 30 Gew.-% ABS-Pfropfcopolymer, MVR (cm³/10 min): 24
2C: Formmasse aus 70 Gew.-% SAN-Copolymer a3 und 30 Gew.-% ABS-Pfropfcopolymer, MVR (cm³/10 min): 6
2D: Formmasse aus 70 Gew.-% SAN-Copolymer a4 und 30 Gew.-% ABS-Pfropfcopolymer, MVR (cm³/10 min): 8
2E: Formmasse aus 70 Gew.-% SAN-Copolymer a5 und 30 Gew.-% ABS-Pfropfcopolymer, MVR (cm³/10 min): 27
3A: Formmasse aus 55 Gew.-% SAN-Copolymer a1 und 45 Gew.-% ABS-Pfropfcopolymer, MVR (cm³/10 min): 22
3B: Formmasse aus 55 Gew.-% SAN-Copolymer a2 und 45 Gew.-% ABS-Pfropfcopolymer, MVR (cm³/10 min): 14
3C: Formmasse aus 55 Gew.-% SAN-Copolymer a3 und 45 Gew.-% ABS-Pfropfcopolymer, MVR (cm³/10 min): 4
3D: Formmasse aus 55 Gew.-% SAN-Copolymer a4 und 45 Gew.-% ABS-Pfropfcopolymer, MVR (cm³/10 min): 5
3E: Formmasse aus 55 Gew.-% SAN-Copolymer a5 und 45 Gew.-% ABS-Pfropfcopolymer, MVR (cm³/10 min): 16
4: Terblend® N NM-21 EF der Fa. Styrolution, ein Blend aus einem mit ABS-Pfropfkautschuk schlagzäh modifizierten SAN-Copolymer und Polyamid-6 im Gewichtsverhältnis 50:50, verträglich gemacht mit einem SANMSA-Copolymeren enthaltend 2% MSA und stabilisiert gegen Licht und Oxydation, MVR (cm³/10 min) gemessen nach ISO 1133-1:2011 bei 240°C und 10 kg Last: 60.

Bei den Formmassen 1A bis 1E, 2A bis 2E und 3A bis 3E (Herstellung gemäß WO 2015/091817 A1, Seiten 44 bis 47) handelt es sich um nicht erfindungsgemäße Beispiele. Die MVR-Werte der Formmassen 1A-3E wurden nach ISO 1133-1:2011 bei 220°C und 10 kg Last gemessen.

Die Formmasse 4 ist ein erfindungsgemäßes Beispiel.

In den Formmassen 1A bis 1E, 2A bis 2E, 3A bis 3E wurden folgende SAN-Copolymere a1 bis a5 eingesetzt:
a1: SAN-Copolymer mit 73 Gew.-% Styrol und 27 Gew.-% Acrylnitril (= S/AN 73/27), MVR (220°C/10'): 55 ccm/10 min
a2: SAN-Copolymer (S/AN 81/19), MVR (220°C/10'): 46 ccm/10 min
a3: SAN-Copolymer (S/AN 75/25), MVR (220°C/10'): 10 ccm/10 min
a4: SAN-Copolymer (S/AN 65/35), MVR (220°C/10'): 16 ccm/10 min
a5: SAN-Copolymer (S/AN 65/35), MVR (220°C/10'): 61 ccm/10 min

Als Schlagzähmodifikator wurde für die Formmassen 1A bis 1E, 2A bis 2E, 3A bis 3E ein ABS-Pfropfcopolymer mit einer trimodalen Teilchengrößenverteilung (WO 2015/091817 A1, Seiten 44 bis 45) eingesetzt. Die Zusammensetzung und Herstellung der Formmassen 1A bis 1E, 2A bis 2E, 3A bis 3E wird in der WO 2015/091817 A1 (Seiten 44 bis 47) beschrieben.

Die Formmassen 1A bis 1E, 2A bis 2E, 3A bis 3E wurden jeweils mit 0,2 Gew.-% Irganox 1076 und 0,3 Gew.-% Irganox PS802 stabilisiert.

### Fused Deposition Modeling-Versuche zur Untersuchung der Brückenbildunqsqualität

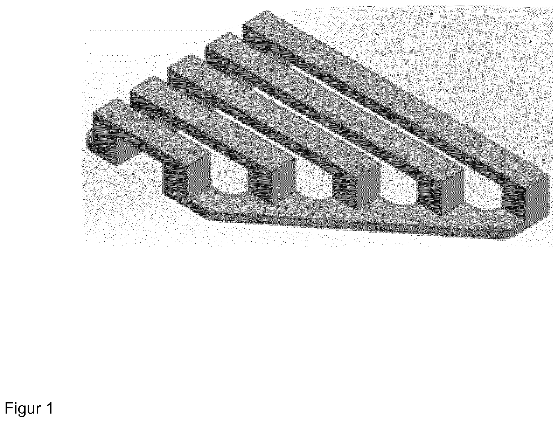

Figur 1 zeigt einen Testkörper mit Brücken verschiedener Längen.

Aus den Formmassen 1A bis 4 wurden mit Hilfe des FDM-Verfahrens derartige Testkörper mit Brückenbildung hergestellt. Die Herstellungsbedingungen sind der nachstehenden Tabelle 1 zu entnehmen.

**Tab. 1**

| | |
|---|---|
| 3D-Drucker | Umbau auf Ultimaker 1-Basis |
| Slicer | CuraEngine |
| Interface | pronterface |
| Düsendurchmesser | 0,4 mm |
| Düsentemperatur | 240 °C |
| Druckbett | Aluminium+Polyimid (Kapton) |
| Druckbetttemperatur | 135 °C |
| Bauraumtemperatur | ca. 40 °C bis 55 °C |
| Probenform | Brücke |
| | Länge 10/20/30/40/50 mm |
| | Breite 5 mm |
| | Höhe 2 mm |
| Schichtdicke | 0,25 mm |
| Füllgrad | 30 % |
| Druckgeschwindigkeit | 30 mm/s |

Zur Beurteilung der Güte des durch 3D-Druck erhaltenen Testkörpers wurde durch visuelle Kontrolle (Sichtprüfung) die Qualität der Brücke beurteilt.

**Dabei galten folgende Kriterien:**

| Kriterium | Punkte |
|---|---|
| Brücke gedruckt | +2 |
| einzelne, bewegliche, durchhängende Stränge | -1 |
| Füllstruktur erkennbar | -1 |

Eine optimale Brücke erzielt gemäß dieser Notenskala 2 Punkte, wobei es für einzelne, bewegliche, durchhängende Stränge und eine erkennbare Füllstruktur insgesamt bis zu 2 Punkte Abzug geben kann und somit eine Null ein schlechtes Ergebnis ist.

### Die erzielten Ergebnisse zeigt Tabelle 2.

Mit der erfindungsgemäßen Formmasse 4 wurden sehr gute Testkörper (Gesamtpunktzahl: 7) erhalten, die stets mit 1 bis 2 Notenpunkten bewertet wurden und die sogar bei einer Brückenlänge von 50 mm eine gute Qualität (1 Notenpunkt) aufweisen. Aus den meisten Formmassen der Vergleichsbeispiele ließ sich bei einer Brückenlänge von 50 mm keine Brücke von befriedigender Qualität erhalten, so dass die Testkörper mit null Punkten bewertet wurden.

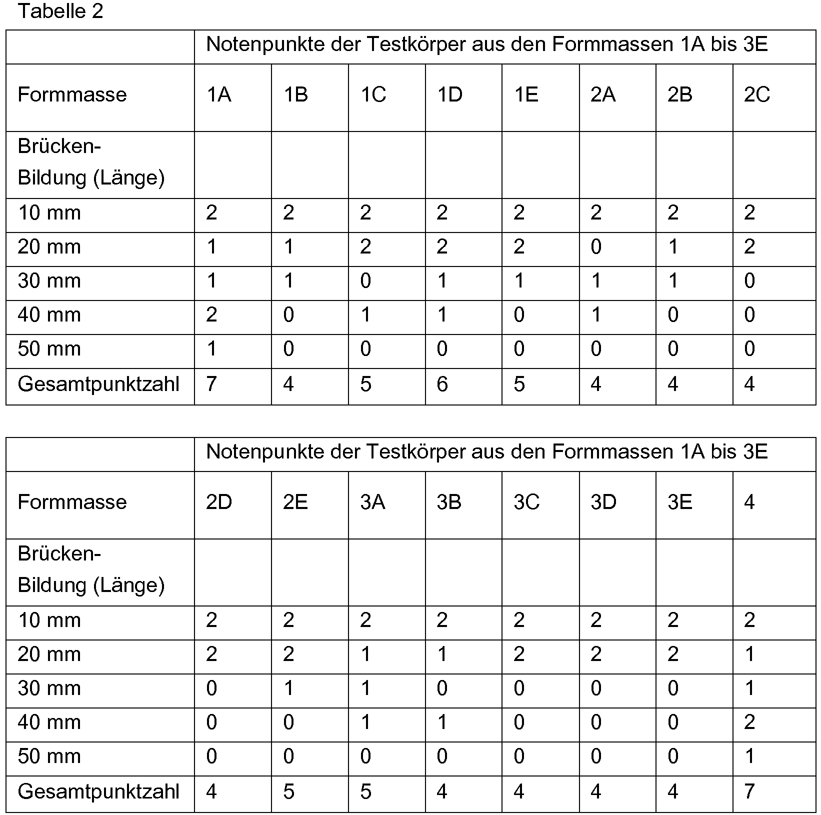

## Patentansprüche

1. Verwendung einer thermoplastischen Formmasse für den 3D-Druck, bestehend aus einer Mischung der Komponenten A bis E:
A: 35 bis 60 Gew.-% mindestens eines schlagzäh modifizierten Polymers A, bestehend aus den Komponenten a und b:
a: 30 bis 95 Gew.-% mindestens eines Styrol-Acrylnitril-Copolymers a mit einer mittleren Molmasse Mw von 150.000 bis 350.000 g/mol, erhalten durch Polymerisation von:
a1: 18 bis 35 Gew.-% Acrylnitril (AN), und
a2: 82 bis 65 Gew.-% Styrol (S);
b: 5 bis 70 Gew.-% mindestens eines Pfropfcopolymers b als Schlagzähmodifikator, mit
b1: 45 bis 85 Gew.-% einer Pfropfgrundlage b1, erhalten durch Polymerisation von:
b11: 80 bis 100 Gew.-% 1,3-Butadien,
b12: 0 bis 20 Gew.-% Styrol;
b2: 15 bis 55 Gew.-% einer Pfropfauflage b2, erhalten durch Polymerisation von:
b21: 70 bis 90 Gew.-%, bevorzugt 72,5 bis 85 Gew.-% Styrol;
b22: 10 bis 30 Gew.-%, bevorzugt 15 bis 27,5 Gew.-% Acrylnitril;
B: 33 bis 58 Gew.-% mindestens eines Polyamids B ausgewählt aus: Polyamid 6 (Polycaprolactam), Polyamid 6,6 (Polyhexamethylenadipamid), Polyamid 4,6 (Polytetramethylenadipamid), Polyamid 5,10 (Polypentamethylenadipamid), Polyamid 6,10 (Polyhexamethylensebacamid), Polyamid 7 (Polyenantholactam), Polyamid 11 (Polyundecanolactam) und Polyamid 12 (Polydodecanolactam);
C: 1 bis 10 Gew.-% mindestens eines Verträglichkeitsvermittlers C auf Basis eines Styrol-Acrylnitril-Maleinsäureanhydrid-Terpolymers erhalten durch Polymerisation von:
C1: 72 bis 84,5 Gew.-%, bevorzugt 74 bis 84 Gew.-% Styrol;
C2: 15 bis 27,5 Gew.-%, bevorzugt 15 bis 25 Gew.-% Acrylnitril;
C3: 0,5 bis 5 Gew.-%, bevorzugt 1 bis 3 Gew.-% Maleinsäureanhydrid;
D: 0,01 bis 5 Gew.-% eines oder mehrerer Hilfsmittel ausgewählt aus: Stabilisatoren, Oxidationsverzögerern, Mitteln gegen Wärmezersetzung und Zersetzung durch ultraviolettes Licht, Gleit- und Entformungsmitteln, Verarbeitungshilfsmitteln und Weichmachern;
E: 0 bis 30 Gew.-% eines oder mehrerer weiterer Additive E;
wobei die Summe aus den Komponenten A, B, C, D und, falls vorhanden E, 100 Gew.-% ergibt.

2. Verwendung einer Formmasse gemäß Anspruch 1, **dadurch gekennzeichnet, dass** die Viskosität (gemessen nach ISO 11443:2014) der Formmasse bei Scherraten von 1 bis 10 1/s und bei Temperaturen von 250°C nicht mehr als 1x10⁵ Pa*s und die Melt Volume Rate (MVR, gemessen nach ISO 1133-1:2011 bei 240°C und 10 kg Last) der Formmasse mehr als 15 ml/10 min beträgt.

3. Verwendung einer Formmasse gemäß Anspruch 1 oder 2, **dadurch gekennzeichnet, dass** die Komponente B Polyamid-6 ist.

4. Verwendung einer Formmasse gemäß einem der Ansprüche 1 bis 3 bestehend aus:
35 bis 50 Gew.-% Komponente A,
40 bis 58 Gew.-% Komponente B,
1 bis 10 Gew.-% Komponente C,
0,01 bis 5 Gew.-% Komponente D, und
0 bis 20 Gew.-% Komponente E.

5. Verwendung einer Formmasse gemäß einem der Ansprüche 1 bis 4 bestehend aus:
35 bis 50 Gew.-% Komponente A,
45 bis 58 Gew.-% Komponente B,
1 bis 10 Gew.-% Komponente C,
0,01 bis 5 Gew.-% Komponente D, und
0 bis 10 Gew.-% Komponente E.

6. Verwendung einer Formmasse gemäß einem der Ansprüche 1 bis 5 bestehend aus:
40 bis 50 Gew.-% Komponente A,
45 bis 55 Gew.-% Komponente B,
2 bis 6 Gew.-% Komponente C,
0,05 bis 3 Gew.-% Komponente D,
0 bis 10 Gew.-% Komponente E.

7. Verwendung einer Formmasse gemäß einem der Ansprüche 1 bis 6, **dadurch gekennzeichnet, dass** in dem schlagzäh modifizierten Polymer A der Anteil der Komponente a 30 bis 60 Gew.-%, bevorzugt 40 bis 60 Gew.-%, und der Anteil des als Schlagzähmodifikators eingesetzten Propfcopolymers b 70 bis 40 Gew.-%, bevorzugt 60 bis 40 Gew.-%, beträgt.

8. Verwendung einer Formmasse gemäß einem der Ansprüche 1 bis 7, **dadurch gekennzeichnet, dass** mindestens ein Pfropfcopolymer b eingesetzt wird mit:
50 bis 80 Gew.-% einer Pfropfgrundlage b1 erhalten durch Polymerisation von:
b11: 100 Gew.-% Butadien; und
20 bis 50 Gew.-% einer Pfropfauflage b2 erhalten durch Polymerisation von:
b21: 70 bis 90 Gew.-%, insbesondere 72,5 bis 85 Gew.-% Styrol,
b22: 10 bis 30 Gew.-%, insbesondere 15 bis 27,5 Gew.-% Acrylnitril.

9. Verwendung einer Formmasse gemäß einem der Ansprüche 1 bis 8, **dadurch gekennzeichnet, dass** die Teilchengröße (d₅₀) des Pfropfcopolymers b mindestens 80 nm und höchstens 1 µm, bevorzugt 100 nm bis 600 nm beträgt.

10. Verwendung einer Formmasse gemäß einem der Ansprüche 1 bis 7 für den 3D-Druck von dreidimensionalen Objekten mit Brückenbildung.

## Claims

1. The use of a thermoplastic molding composition for 3D printing, consisting of a mixture of the components A to E:
A: 35 to 60 wt% of at least one impact-modified polymer A, consisting of the components a and b:
a: 30 to 95 wt% of at least one styrene-acrylonitrile copolymer a having an average molar mass Mw of 150 000 to 350 000 g/mol, obtained by polymerization of:
a1: 18 to 35 wt% of acrylonitrile (AN), and
a2: 82 to 65 wt% of styrene (S);
b: 5 to 70 wt% of at least one graft copolymer b as impact modifier, with
b1: 45 to 85 wt% of a graft base b1, obtained by polymerization of:
b11: 80 to 100 wt% of 1,3-butadiene,
b12: 0 to 20 wt% of styrene;
b2: 15 to 55 wt% of a graft b2, obtained by polymerization of:
b21: 70 to 90 wt%, preferably 72.5 to 85 wt%, of styrene;
b22: 10 to 30 wt%, preferably 15 to 27.5 wt%, of acrylonitrile;
B: 33 to 58 wt% of at least one polyamide B selected from the following: polyamide 6 (polycaprolactam), polyamide 6,6 (polyhexamethyleneadipamide), polyamide 4,6 (polytetramethyleneadipamide), polyamide 5,10 (polypentamethyleneadipamide), polyamide 6,10 (polyhexamethylenesebacamide), polyamide 7 (polyenantholactam), polyamide 11 (polyundecanolactam), and polyamide 12 (polydodecanolactam);
C: 1 to 10 wt% of at least one compatibilizer C based on a styrene-acrylonitrilemaleic anhydride terpolymer obtained by polymerization of:
C1: 72 to 84.5 wt%, preferably 74 to 84 wt%, of styrene;
C2: 15 to 27.5 wt%, preferably 15 to 25 wt%, of acrylonitrile;
C3: 0.5 to 5 wt%, preferably 1 to 3 wt%, of maleic anhydride;
D: 0.01 to 5 wt% of one or more auxiliaries selected from the following:
stabilizers, oxidation retarders, agents against thermal decomposition and decomposition by ultraviolet light, lubricants and mold release agents, processing assistants, and plasticizers;
E: 0 to 30 wt% of one or more further additives E;
where the sum of the components A, B, C, D and, if present, E makes 100 wt%.

2. The use of a molding composition as claimed in claim 1, **characterized in that** the viscosity (measured to ISO 11443:2014) of the molding composition at shear rates of 1 to 10 1/s and at temperatures of 250°C is not more than 1x10⁵ Pa*s and the melt volume rate (MVR, measured to ISO 1133-1:2011 at 240°C and 10 kg load) of the molding composition is more than 15 ml/10 min.

3. The use of a molding composition as claimed in claim 1 or 2, **characterized in that** component B is polyamide 6.

4. The use of a molding composition as claimed in any of claims 1 to 3, consisting of:
35 to 50 wt% of component A,
40 to 58 wt% of component B,
1 to 10 wt% of component C,
0.01 to 5 wt% of component D, and
0 to 20 wt% of component E.

5. The use of a molding composition as claimed in any of claims 1 to 4, consisting of:
35 to 50 wt% of component A,
45 to 58 wt% of component B,
1 to 10 wt% of component C,
0.01 to 5 wt% of component D, and
0 to 10 wt% of component E.

6. The use of a molding composition as claimed in any of claims 1 to 5, consisting of:
40 to 50 wt% of component A,
45 to 55 wt% of component B,
2 to 6 wt% of component C,
0.05 to 3 wt% of component D, and
0 to 10 wt% of component E.

7. The use of a molding composition as claimed in any of claims 1 to 6, **characterized in that** in the impact-modified polymer A, the fraction of component a is 30 to 60 wt%, preferably 40 to 60 wt%, and the fraction of the graft copolymer b used as impact modifier is 70 to 40 wt%, preferably 60 to 40 wt%.

8. The use of a molding composition as claimed in any of claims 1 to 7, **characterized in that** at least one graft copolymer b is used with:
50 to 80 wt% of a graft base b1 obtained by polymerization of:
b11: 100 wt% of butadiene; and
20 to 50 wt% of a graft b2 obtained by polymerization of:
b21: 70 to 90 wt%, more particularly 72.5 to 85 wt%, of styrene,
b22: 10 to 30 wt%, more particularly 15 to 27.5 wt% of acrylonitrile.

9. The use of a molding composition as claimed in any of claims 1 to 8, **characterized in that** the particle size (d₅₀) of the graft copolymer b is at least 80 nm and at most 1 µm, preferably 100 nm to 600 nm.

10. The use of a molding composition as claimed in any of claims 1 to 7 for the 3D printing of three-dimensional objects with bridging.

## Revendications

1. Utilisation d'une composition thermoplastique pour moulage destinée à l'impression 3D, constituée d'un mélange des composants A à E:
A: 35 à 60 % en poids d'au moins un polymère A modifié résistant aux chocs, constitué des composants a et b:
a: 30 à 95 % en poids d'au moins un copolymère styrène-acrylonitrile a ayant un poids moléculaire moyen Mw de 150 000 à 350 000 g/mol, obtenu par polymérisation de:
a1: 18 à 35 % en poids d'acrylonitrile (AN) et
a2: 82 à 65 % en poids de styrène (S);
b: 5 à 70 % en poids d'au moins un copolymère greffé b agissant en tant que modificateur de résistance aux chocs, avec
b1: 45 à 85 % en poids d'une base greffée b1, obtenue par polymérisation de:
b11: 80 à 100 % en poids de 1,3-butadiène,
b12: 0 à 20 % en poids de styrène;
b2: 15 à 55 % en poids d'une couche greffée b2, obtenue par polymérisation de:
b21: 70 à 90 % en poids, de préférence 72,5 à 85 % en poids de styrène
b22: 10 à 30 % en poids, de préférence 15 à 27,5 % en poids, d'acrylonitrile;
B: 33 à 58% en poids d'au moins un polyamide B choisi parmi: les polyamide 6 (polycaprolactame), polyamide 6,6 (polyhexaméthylèneadipamide), polyamide 4,6 (polytétraméthylèneadipamide), polyamide 5,10 (polypentaméthylèneadipamide), polyamide 6,10 (polyhexaméthylensébacamide), polyamide 7 (polyénantholactame), polyamide 11 (polyundécanolactame) et polyamide 12 (polydodécanolactame);
C: 1 à 10 % en poids d'au moins un agent de compatibilisation C exprimé sur la base de terpolymères de styrène-acrylonitrile-anhydride d'acide maléique obtenus par polymérisation de:
C1: 72 à 84,5 % en poids, de préférence 74 à 84 % en poids de styrène;
C2: 15 à 27,5 % en poids, de préférence 15 à 25 % en poids, d'acrylonitrile;
C3: 0,5 à 5 % en poids, de préférence 1 à 3 % en poids d'anhydride d'acide maléique;
D: 0,01 à 5 % en poids d'un ou plusieurs adjuvants choisis parmi: les stabilisants, les retardateurs d'oxydation, les agents contre la décomposition thermique et la décomposition par la lumière ultraviolette, les lubrifiants et les agents de démoulage, les adjuvants de fabrication et les plastifiants;
E: 0 à 30 % en poids d'un ou plusieurs autres additifs E;
la somme des composants A, B, C, D et, le cas échéant, E, représentant 100 % en poids.

2. Utilisation d'une composition pour moulage selon la revendication 1, **caractérisée en ce que** la viscosité (mesurée selon ISO 11443:2014) de la composition pour moulage à des vitesses de cisaillement de 1 à 10 1/s et à des températures de 250°C n'est pas inférieure à 1x10⁵ Pa*s et l'indice de fluidité à chaud en volume (MVR, mesuré selon ISO 1133-1:2011 à 240°C et 10 kg charge) de la composition pour moulage est supérieur à 15 ml/10 mn.

3. Utilisation d'une composition pour moulage selon la revendication 1, 1 ou 2, **caractérisée en ce que** le composant B est le polyamide-6.

4. Utilisation d'une composition de moulage selon la revendication 1 à 3 constituée de:
- 35 à 50 % en poids du composant A,
- 40 à 58 % en poids du composant B,
- 1 à 10 % en poids du composant C,
- 0,01 à 5 % en poids du composant D et
- 0 à 20 % en poids du composant E.

5. Utilisation d'une composition pour moulage conforme à l'une des revendications 1 à 4 consistant en:
- 35 à 50 % en poids du composant A,
- 45 à 58 % en poids du composant B,
- 1 à 10 % en poids du composant C,
- 0,01 à 5 % en poids du composant D et
- 0 à 10% en poids du composant E.

6. Utilisation d'une composition pour moulage selon les revendications 1 à 5 consistant en
- 40 à 50 % en poids du composant A,
- 45 à 55 % en poids du composant B,
- 2 à 6 % en poids du composant C,
- 0,05 à 3 % en poids du composant D,
- 0 à 10 % en poids du composant E.

7. Utilisation d'une composition pour moulage selon l'une des revendications 1 à 6, **caractérisé en ce que**, dans le polymère A modifié résistant aux chocs, la proportion du composant a est de 30 à 60 % en poids, de préférence 40 à 60 % en poids, et la proportion du polymère greffé b agissant en tant que modificateur de la résistance aux chocs est de 70 à 40 en poids, de préférence de 60 à 40 % en poids.

8. Utilisation d'une composition pour moulage selon la revendication 1 à 7, **caractérisée en ce qu'**au moins un copolymère greffé b est utilisé avec 50 à 80 % en poids d'une couche greffée b1 obtenue par polymérisation de:
- b11: 100 % en poids de butadiène; et 20 à 50 % en poids d'un support greffé b2 obtenu par polymérisation de:
- b21: 70 à 90 % en poids de butadiène; et en particulier 72,5 à 85 % en poids de styrène,
- b22: 10 à 30 % en poids, en particulier 15 à 27,5 % en poids d'acrylonitrile,

9. Utilisation d'une composition pour moulage selon l'une des revendications 1 à 8, **caractérisée en ce que** la taille des particules (d₅₀) du copolymère greffé b est d'au moins de 80 nm et au plus de 1 µm, de préférence 100 à 600 nm.

10. Utilisation d'une composition pour moulage selon l'une des revendications 1 à 7, pour l'impression en 3D d'objets tridimensionnels avec formation de pontages.
